# EUROPÄISCHE PATENTSCHRIFT

(11) **EP 2 909 519 B1**
(45) Veröffentlichungstag und Bekanntmachung des Hinweises auf die Patenterteilung: **03.08.2016**
(21) Anmeldenummer: 13776520.2
(22) Anmeldetag: 15.10.2013
(51) Int. Cl.: F16L 37/32, F16L 37/56

(54) **KOAXIALE HOCHDRUCKKUPPLUNG MIT UEBERDRUCKENTLASTUNG**
COAXIAL HIGH-PRESSURE COUPLING HAVING OVERPRESSURE RELIEF
ACCOUPLEMENT COAXIAL À HAUTE PRESSION AVEC DÉCHARGE DE SURPRESSION

(30) Priorität: 16.10.2012 DE 102012109865; 11.03.2013 DE 102013102383
(43) Veröffentlichungstag der Anmeldung: 26.08.2015
(73) Patentinhaber: Parker Hannifin Manufacturing Germany GmbH & Co. KG, 33659 Bielefeld (DE)
(72) Erfinder: NOWACK, Olaf, 73574 Iggingen (DE); WITT, Stefan, 71735 Eberdingen-Nussdorf (DE)
(74) Vertreter: Müller, Karl-Ernst
(86) Internationale Anmeldenummer: PCT/EP2013/071552
(87) Internationale Veröffentlichungsnummer: WO 2014/060433

(56) Entgegenhaltungen:
- WO-A1-2008/130311
- DE-C1- 10 107 907
- GB-A- 2 184 508

## Beschreibung

Die Erfindung betrifft eine koaxiale Hochdruckkupplung für Schläuche oder Rohrleitungen mit einem Steckerteil und mit einem dieses in gekuppeltem Zustand aufnehmenden Aufnahmeteil, wobei Steckerteil und Aufnahmeteil jeweils einen Ventilkörper mit einem inneren Kanal und einem dazu konzentrischen äußeren Kanal aufweisen und in gekuppeltem Zustand die inneren Kanäle und die äußeren Kanäle von Steckerteil und Aufnahmeteil miteinander verbunden sind, und wobei in dem inneren Kanal des Ventilkörpers des Steckerteils ein Schließkegel und in dem äußeren Kanal des Steckerteils eine Schließhülse jeweils gegen Federwirkung beweglich und während des Kupplungsvorganges jeweils durch das Aufnahmeteil in ihre Öffnungsstellung verschiebbar sind.

Eine Hochdruckkupplung mit den vorgenannten Merkmalen ist in der EP 0 853 743 B1 beschrieben. Derartige Kupplungen mit jeweils einem einen inneren und einen äußeren Kanal aufweisenden Steckerteil sowie entsprechend ausgebildetem Aufnahmeteil werden insbesondere zur Verbindung eines hydraulischen Antriebselements mit einer hydraulisch angetriebenen Vorrichtung benötigt, soweit beispielsweise eine Hydraulikpumpe als Antriebselement mit einem Werkzeug als Vorrichtung nicht nur über eine Druckleitung, sondern auch über eine Rückführungsleitung verbunden ist. Bei einer derartigen Hochdruckkupplung kann das Problem auftreten, dass im ungekuppelten Zustand insbesondere im Steckerteil das von dem Schließkegel im inneren Kanal des Steckerteils eingeschlossene Fluid sich erhitzt, wodurch es zu einer derartigen Druckerhöhung kommen kann, dass das Kuppeln der Hochdruckkupplung durch Einführen des Steckerteils in das Aufnahmeteil erschwert ist, weil der Schließkegel im inneren Kanal des Steckerteils gegen den erhöhten Druck bewegt werden muss.

Soweit eine entsprechend aufgebaute Hochdruckkupplung aus der WO 2008/ 130311 A bekannt ist, ist zur Lösung des vorgenannten Problems dort vorgeschlagen, dass in dem den inneren Kanal des Steckerteils im ungekuppelten Zustand verschließenden Schließkegel ein Entlastungsventil angeordnet ist, welches zu Beginn des Kupplungsvorganges von einem Bauteil des Aufnahmeteils geöffnet wird, sodass das im inneren Kanal des Steckerteils unter Druck stehende Fluid in den inneren Kanal des Aufnahmeteils abströmen kann, und zwar bevor durch die jeweilige Stellung der Schließglieder von Steckerteil und Aufnahmeteil im gekuppelten Zustand eine Freigabe der Fließwege jeweils zwischen den inneren Kanälen und den äußeren Kanälen von Aufnahmeteil und Steckerteil erfolgt. Mit dieser bekannten Lösung ist noch der Nachteil verbunden, dass zwischenzeitlich im Steckerteil ein sehr hoher Druck anstehen kann, der zu einer dauernden hohen Beanspruchung des Ventilkörpers mit dessen Dichtungen führt und der trotz des Entlastungsventils den Kupplungsvorgang erschweren kann.

Der Erfindung liegt daher die Aufgabe zugrunde, eine koaxiale Hochdruckkupplung der eingangs genannten Art und mit den gattungsgemäßen Merkmalen so auszugestalten, dass die nachteiligen Folgen einer im Steckerteil auftretenden Druckerhöhung vermieden sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass im Inneren des in dem von einem Innenrohr gebildeten inneren Kanal beweglichen Schließkegels eine einerseits mit dem inneren Kanal verbundene und andererseits eine Verbindung mit der Atmosphäre aufweisende Ventilbohrung mit einem darin verschiebbar angeordneten Ventilkolben angeordnet ist und der Ventilkolben durch Federwirkung in seine die Verbindung zwischen der Ventilbohrung und dem inneren Kanal sperrende Sperrstellung vorgespannt und durch einen entgegen der Feder wirkenden, im inneren Kanal anstehenden Überdruck in eine Leckagestellung verschiebbar ist.

Mit der Erfindung ist der Vorteil verbunden, dass ein im inneren Kanal des Ventilkörpers des Steckerteils sich einstellender hoher Druck über das im Inneren des Schließkegels angeordnete Zusatzventil mit dem in der Ventilbohrung des Schließkegels angeordneten federbelasteten Ventilkolben in die Atmosphäre abgebaut wird, indem das im inneren Kanal anstehende Fluid bei Druckerhöhung auf den Ventilkolben wirkt und diesen in eine Leckagestellung verschiebt, in welcher das Fluid an dem Ventilkolben vorbei in die Atmosphäre austreten kann. Hierdurch kommt in dem Steckerteil kein hoher Druck mehr zustande; vielmehr wird dieser automatisch abgebaut, und zwar jeweils bei Erreichen des durch die Kraft der den Ventilkolben vorspannenden Feder definierten Grenzdruckes. Damit ist der Ventilkörper des Steckerteils von unerwünschten Druckeinwirkungen gänzlich freigehalten und es lässt sich die erfindungsgemäße Kupplung auch jeweils leicht einkuppeln.

Nach einem Ausführungsbeispiel der Erfindung ist dabei vorgesehen, dass zur Ausbildung eines in der Leckagestellung des Ventilkolbens wirksamen Leckageweges zwischen dem inneren Kanal und der Atmosphäre die Ventilbohrung mit einer stufenweisen Querschnittserweiterung versehen ist.

Soweit gemäß einer Ausführungsform der Erfindung vorgesehen ist, dass die Querschnittserweiterung mit einem von dem Ventilkolben bei Beaufschlagung mit Überdruck zu durchschreitenden Abstand zu dem in seiner Sperrstellung befindlichen Ventilkolben angeordnet ist, ist damit der zusätzliche Vorteil verbunden, dass sich bei einem beginnenden Druckanstieg im Steckerteil das Fluid zunächst in den genannten Abstand in der Ventilbohrung ausdehnen kann, ohne dass es durch Verschiebung des Ventilkolbens gleich zu der vorgesehenen Leckage und einem Austritt von Fluid aus dem Steckerteil kommt.

Nach einem Ausführungsbeispiel der Erfindung ist vorgesehen, dass zwischen dem im inneren Kanal des Ventilkörpers des Steckerteils angeordneten Schließkegel und einer an das Steckerteil angeschlossenen weiterführenden Leitung ein Rückschlagventil eingeschaltet ist. Hiermit ist das im Steckerteil bzw. in dessen Ventilkörper nach dem Entkuppeln der Hochdruckkupplung eingeschlossene Volumen begrenzt, weil das in der an das Steckerteil oder ein entsprechendes Anschlussteil angeschlossenen Rohr- oder Schlauchleitung weiterhin anstehende Fluidvolumen durch das Rückschlagventil von dem Ventilkörper bzw. Anschlussteil des Steckerteils abgekoppelt ist, so dass nur das im Ventilkörper bzw. Anschlussteil anstehende Restfluid Gegenstand einer durch Außeneinwirkung eintretenden Druckerhöhung sein kann.

Soweit bei entkuppelter Hochdruckkupplung auch in dem äußeren Kanal des Steckerteils ein Druckanstieg nicht gänzlich ausgeschlossen werden kann, kann nach einem Ausführungsbeispiel der Erfindung vorgesehen sein, dass im Steckerteil zur Vermeidung eines Druckanstiegs in dessen äußerem Kanal im Ventilkörper oder im Aufnahmeteil ein mit dem äußeren Kanal oder der diesem zugeordneten Anschlussbohrung verbundener Hohlraum ausgebildet ist, in welchem ein von einer Feder in eine den Hohlraum absperrende Stellung vorgespannter Kolben beweglich ist, der durch einen im äußeren Kanal bzw. in der Anschlussbohrung ansteigenden Druck in den Hohlraum hinein in eine den Hohlraum zum Druckausgleich freigebende Stellung verschiebbar ist. Im Falle eines im äußeren Kanal des Steckerteils eintretenden Druckanstiegs wird mit der Bewegung des Kolbens im Hohlraum durch den freigegebenen Teil des Hohlraums ein zusätzliches Volumen zur Verfügung gestellt, in welches sich das im äußeren Kanal anstehende Fluidvolumen ausdehnen und dementsprechend ein Druckanstieg abgebaut werden kann.

Bei einer gattungsgemäßen Kupplung soll weiterhin dafür Sorge getragen sein, dass beim Einkuppeln der Kupplung nicht gleichzeitig alle vier an die Kupplungsteile angeschlossenen Rohrleitungen bzw. Schläuche gleichzeitig miteinander verbunden werden. Hierzu ist es bei einer entsprechend aufgebauten, aus der EP 1 789 717 B1 bekannten Hochdruckkupplung bekannt, zumindest in den Ventilkörperaufbau des Aufnahmeteils ein Kurzschlussventil einzuschließen, welches einerseits in ungekuppeltem Zustand zum Druckausgleich eine Verbindung zwischen dem inneren Kanal und dem äußeren Kanal des Aufnahmeteils herstellt und andererseits in gekuppeltem Zustand diese Verbindung schließt.

In einer zweckmäßigen Ausführungsform der Erfindung ist hierzu vorgesehen, dass ein den inneren Kanal des Aufnahmeteils bildendes Innenrohr zwei im axialen Abstand zueinander angeordnete Bohrungen aufweist und ein in dem das Innenrohr umschließenden äußeren Kanal auf dem Innenrohr verschiebbarer hülsenförmiger Schließkörper einerseits in einer im ungekuppelten Zustand gegebenen Schließstellung die vordere, dem Steckerteil zugewandte Bohrung des Innenrohrs verschließt und die hintere Bohrung als Kurzschlussweg zwischen innerem Kanal und äußerem Kanal des Aufnahmeteils freigibt und andererseits in einer durch eine während des Kupplungsvorganges eintretende Anlage der dem Aufnahmeteil zugewandten Stirnfläche des Innenrohres des Steckerteils an der Stirnfläche des Schließkörpers des Aufnahmeteils in das Innere des Ventilkörpers des Aufnahmeteils hinein verschobenen Stellung die hintere Bohrung des Innenrohres verschließt und die vordere Bohrung freigibt, so dass in gekuppeltem Zustand der innere Kanal des Aufnahmeteils über die vordere Bohrung mit dem inneren Kanal des Steckerteils verbunden ist.

Soweit während des Kupplungsvorganges beim Einschieben des Steckerteils in den Aufnahmeteil der Schließkörper im Aufnahmeteil von dem mit seiner Stirnfläche gegen die Stirnfläche des Schließkörpers drückenden Innenrohr des Steckerteils in eine Freigabestellung für die vordere Bohrung des Innenrohres des Aufnahmeteils verschoben wird, bildet sich zwischen den aneinander anliegenden Stirnflächen von Innenrohr des Steckerteils und Schließkörper des Aufnahmeteils ein möglicher Strömungsweg aus, über den bei entsprechendem Druckunterschied zwischen dem Innenkanal von Aufnahmeteil und dem Außenkanal des Steckerteils Fluid von dem Innenkanal des Aufnahmeteils in den Außenkanal des Steckerteils überströmen kann. Da aufgrund der erfindungsgemäßen, die Überdrucksicherung im Steckerteil enthaltenen Ausbildung des Steckerteils der Kupplungsvorgang nicht gegen Überdruck im inneren Kanal des Steckerteils erfolgen kann, ist eine derartige Kurzschlussverbindung zwischen dem inneren Kanal des Aufnahmeteils und dem äußeren Kanal des Steckerteils während des Kupplungsvorganges nicht vorgesehen, und daher sind nach einem Ausführungsbeispiel der Erfindung die Stirnflächen von Schließkörper und Innenrohr zur fortwährenden Abdichtung des inneren Kanals des Aufnahmeteils gegen den äußeren Kanal des Steckerteils gegeneinander abgedichtet.

Hierzu kann in alternativen Ausführungsformen der Erfindung vorgesehen sein, dass entweder zur Abdichtung der Stirnflächen gegeneinander in einer der beiden Stirnflächen eine Nut mit einer darin eingelegten Dichtung angeordnet ist, oder dass zur Abdichtung der Stirnflächen gegeneinander durch Bearbeitung wenigstens einer Stirnfläche eine bei gegenseitiger Anlage der Stirnflächen verwirklichte metallische Dichtung eingerichtet ist.

Gemäß einem Ausführungsbeispiel der Erfindung ist aber auch nicht ausgeschlossen, dass ein derartiger Kurzschlussweg zwischen dem inneren Kanal des Aufnahmeteils und dem äußeren Kanal des Steckerteils in einem bestimmten Stadium des Kupplungsvorganges wirksam wird, und insofern kann vorgesehen sein, dass die aneinander liegenden Stirnflächen von Schließkörper des Aufnahmeteils und Innenrohr des Steckerteils in einer aus der EP 1 789 717 B1 an sich bekannten Weise eine Flüssigkeitsdurchgang zulassen und in einem Zwischenstadium während des Kupplungsvorganges der innere Kanal des Aufnahmeteils mit dem äußeren Kanal des Steckerteils kurzzeitig verbunden ist.

Im Einzelnen kann hierbei vorgesehen sein, dass im Inneren des auf dem Innenrohr verschiebbaren hülsenförmigen Schließkörpers jeweils ein an dessen äußeren Enden angeordneter Gleitring aus einem gleitfähigen Material und ein dazwischen liegender Distanzring angeordnet sind, wobei in der Schließstellung des Schließkörpers der Distanzring in dem ungekuppelten Zustand die vordere Bohrung des Innenrohres überdeckt und die beiden Gleitringe mittels auf ihrem Umfang angeordneter Dichtungsringe gegen den Schließkörper abgedichtet sind.

Schließlich ist es zur Betätigung der Hochdruckkupplung beim Ein- und Auskuppeln aus der bereits genannten WO 2008/130311 A bekannt, dass an dem Aufnahmeteil eine drehbare äußere Betätigungshülse und eine damit zusammenwirkende innere Verriegelungshülse mit daran ausgebildeten und in schraubenförmige Nuten des Steckerteils eingreifenden Mitnehmervorsprüngen angeordnet ist. Ist zu Beginn des Einkuppelns das Steckerteil in das Aufnahmeteil soweit eingeführt, dass die innenseitigen Mitnehmervorsprünge der Verriegelungshülse in die schraubenförmigen Nuten des Steckerteils eingreifen, so kann der Kupplungsvorgang durch Drehen der Betätigungshülse ausgeführt werden, wodurch die in den schraubenförmigen Nuten des Steckerteils gleitenden Mitnehmervorsprünge das Steckerteil in eine axiale Bewegung in das Aufnahmeteil hinein bis zur vollständigen Kupplung von Aufnahmeteil und Steckerteil miteinander zwingen.

Da bei einer derartigen Ausbildung auch ein unbeabsichtigtes Entkuppeln durch Rückdrehung der Betätigungshülse möglich ist, schlägt die Erfindung zusätzlich zur Verbesserung der Bedienungssicherheit gegen Entkuppeln vor, dass die äußere Betätigungshülse relativ zu der Verriegelungshülse zwischen einer ungekoppelten, gegenüber der Verriegelungshülse frei drehbaren Ruhestellung und einer Eingriffsstellung mit der Verriegelungshülse verschiebbar ist und in der Eingriffsstellung mittels einer Sperre mit der Verriegelungshülse verrastet, so dass nur in der Eingriffsstellung bei Drehung der Betätigungshülse die Verriegelungshülse in eine Drehbewegung mitgenommen wird. Somit ist ein Einkuppeln wie auch Entkuppeln der Hochdruckkupplung nur möglich, wenn die äußere Betätigungshülse zunächst axial in die Eingriffsstellung mit der Verriegelungshülse verschoben ist, in welcher Eingriffsstellung eine Drehung der Betätigungshülse in eine Drehung der Verriegelungshülse umgesetzt wird. Jeweils nach dem Loslassen der Betätigungshülse kehrt diese unter der Wirkung der entsprechend vorgesehenen Feder in ihre Ruhestellung zurück, in welcher eine Verdrehung der Verriegelungshülse und damit die Ausführung der Kuppelbewegung ausgeschlossen ist.

In der Zeichnung sind Ausführungsbeispiele der Erfindung wiedergegeben, welche nachstehend beschrieben sind. Es zeigen:
- Fig. 1: das Steckerteil einer Hochdruckkupplung in Einzeldarstellung in einer geschnittenen Seitenansicht,
- Fig. 2: das im Schließkegel des Steckerteils angeordnete Zusatzventil gemäß Einzelheit "X" in Figur 1 in einer vergrößerten Teilansicht,
- Fig. 3: das zugehörige Aufnahmeteil der Hochdruckkupplung in Einzeldarstellung in einer geschnittenen Seitenansicht,
- Fig. 4: die Hochdruckkupplung mit Steckerteil (Figur 1) und Aufnahmeteil (Figur 3) in gekuppeltem Zustand in einer Darstellung entsprechend Figuren 1 und 3,
- Fig. 5: die Hochdruckkupplung mit Steckerteil und Aufnahmeteil während des Kupplungsvorganges mit einer Abdichtung des inneren Kanals im Aufnahmeteil gegen den äußeren Kanal im Steckerteil in einer vergrößerten Darstellung des Verbindungsbereichs der inneren Kanäle von Aufnahmeteil und Steckerteil sowie der äußeren Kanäle von Aufnahmeteil und Steckerteil,
- Fig. 6: das Steckerteil gemäß Figur 1 in einer abgeänderten, mit einer zusätzlichen Überdrucksicherung für den äußeren Kanal versehenen Ausführungsform.

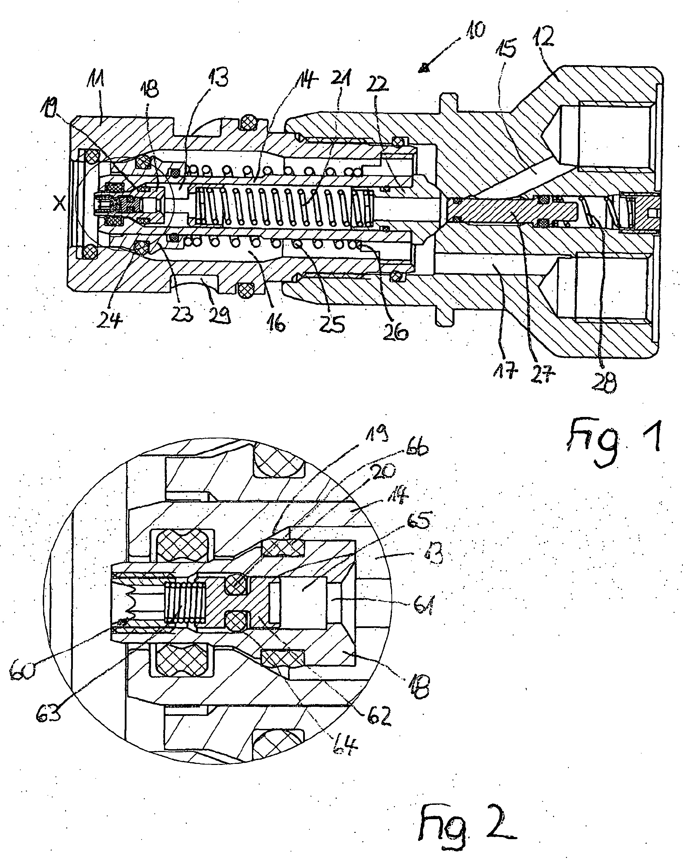

Das aus Figur 1 ersichtliche Steckerteil 10 einer Hochdruckkupplung weist einen Ventilkörper 11 und einen mit diesem verbundenen Anschlussteil 12 auf. In dem Ventilkörper 11 ist ein durch ein Innenrohr 14 des Ventilkörpers 10 gebildeter Innenkanal 13 vorgesehen, der über eine in dem Anschlussteil 12 ausgebildete Anschlussbohrung 15 mit einer an das Anschlussteil 12 angeschlossenen, nicht weiter dargestellten Rohr- oder Schlauchleitung verbunden sein kann. In dem Ventilkörper 11 ist ferner ein den inneren Kanal 13 konzentrisch umgebender äußerer Kanal 16 ausgebildet, der mit einer in dem Anschlussteil 12 ausgebildeten Anschlussbohrung 17 verbunden und hierüber ebenfalls an die an das Anschlussteil 12 angeschlossene Rohr- oder Schlauchleitung angeschlossen ist.

In der dargestellten Schließstellung des Steckerteils 10 ist in dem Innenrohr 14 ein Schließkegel 18 angeordnet, der von einer sich an einem Federwiderlager 22 abstützenden Feder 21 in Anlage an einem kegelförmigen Sitz 19 gedrückt ist; hierbei ist der Schließkegel 18 über eine Dichtung 20 gegen die Innenwandung des Innenrohres 14 abgedichtet.

Zum Verschließen des äußeren Kanals 16 ist auf dem Innenrohr 14 eine Schließhülse 23 verschiebbar geführt, die von einer sich an einem Federwiderlager 26 als Bestandteil des Ventilkörpers 11 abstützenden Feder 25 in Anlage an einen am vorderen Ende des Steckerteils 10 ausgebildeten Dichtsitz 24 gedrückt ist.

Somit sind der innere Kanal 13 durch den Schließkegel 18 wie auch der äußere Kanal 16 durch die Schließhülse 23 jeweils nach außen abgedichtet.

Bei dem dargestellten Ausführungsbeispiel ragt in dem Anschlussteil 12 ein von einer Stützfeder 28 vorgespanntes Rückschlagventil 27 in die Anschlussbohrung 15 hinein, so dass in der in Figur 1 dargstellten Schließstellung des Rückschlagventils 27 der innere Kanal 13 des Ventilkörpers 11 gegen das im Anschlussteil 12 sowie in der daran angeschlossenen Rohr- oder Schlauchleitung anstehende Fluid abgesperrt ist.

Im Hinblick auf die Kupplung des Steckerteils 10 mit dem noch zu beschreibenden Aufnahmeteil ist am äußeren Umfang des Steckerteils 10 noch eine schraubenförmige verlaufende Nut 29 angeordnet, deren Funktion und Wirkung nachstehend weiter beschrieben ist.

Wenn in dem im entkuppelten Zustand gemäß Figur 1 das im inneren Kanal 13 des Steckerteils 10 zwischen dem vorderen Schließkegel 18 und dem hinteren Rückschlagventil 27 eingeschlossene Fluidvolumen beispielsweise durch Hitzeeinwirkung erwärmt wird und sich eine entsprechende Druckerhöhung einstellt, so ist zum Druckabbau in dem Schließkegel 18 ein Zusatzventil 60 angeordnet, wie im Einzelnen in Figur 2 dargestellt. Dieses Zusatzventil 60 besteht aus einer den Schließkegel 18 durchsetzenden Ventilbohrung 61, die auf der einen Seite mit einer kegelförmigen Erweiterung mit dem inneren Kanal 13 in Verbindung steht und auf der gegenüberliegenden Seite einen Austritt in die Atmosphäre aufweist. In der Ventilbohrung 61 ist ein Ventilkolben 62 gegen die Wirkung einer Feder 63 verschiebbar angeordnet, der auf seinem äußeren Umfang eine Dichtung 66 trägt. Zur Ausbildung eines Leckageweges ist die Ventilbohrung 61 mit einer in einem Abstand 65 zu dem Anschluss der Ventilbohrung 61 an den inneren Kanal angeordneten Querschnittserweiterung 64 versehen, die so ausgebildet ist, dass bei Eintritt der Dichtung 66 des Ventilkolben 62 in die Querschnittserweiterung 64 keine Abdichtung des Ventilkolbens 62 gegen die Wandung der Ventilbohrung 61 bzw. von deren Querschnittserweiterung 64 mehr gegeben ist, so dass Fluid von dem inneren Kanal 13 durch die Ventilbohrung 61 außen an dem Ventilkolben 62 mit Dichtung 66 vorbei in die Atmosphäre austreten kann. Hierbei ist in Figur 2 die Leckagestellung des Ventilkolbens 62 in der Ventilbohrung 61 dargestellt. Im geschlossenen Zustand des Zusatzventils 60 sorgt die Feder 63 dafür, dass sich der Ventilkolben 61 mit Dichtung 66 innerhalb des vorgegebenen Abstandes 65 befindet, in welchem dann die Dichtung 66 für eine Abdichtung der Ventilbohrung 61 sorgt.

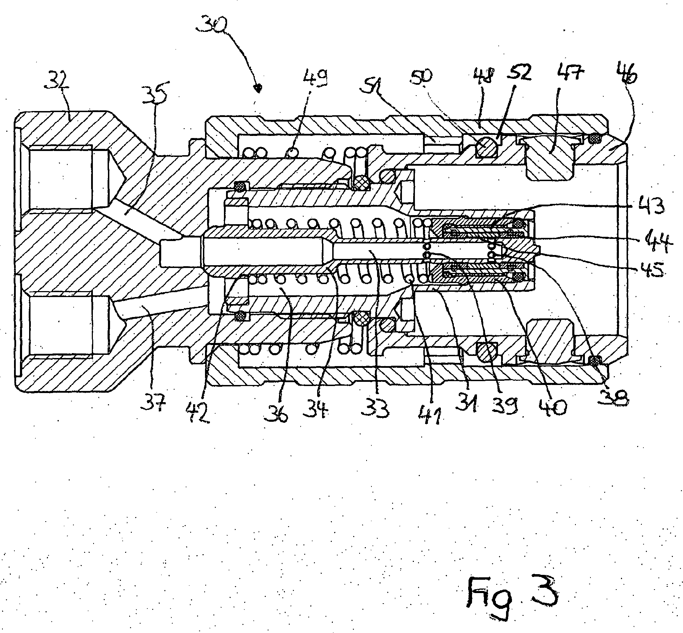

Das zu dem zu Figuren 1 und 2 beschriebenen Steckerteil 10 zugehörige Aufnahmeteil 30 der erfindungsgemäßen Hochdruckkupplung ist aus Figur 3 ersichtlich. Das Aufnahmeteil 30 besteht wiederum aus einem Ventilkörper 31 und einem damit verbundenen Anschlussteil 32. In dem Aufnahmeteil 30 ist ein durch ein entsprechend angeordnetes Innenrohr 34 gebildeter innerer Kanal 33 ausgebildet, der wiederum an eine im Anschlussteil 32 ausgebildete Anschlussbohrung 35 angeschlossen ist. Entsprechend dem Aufbau des Steckerteils ist auch im Aufnahmeteil 30 ein das Innenrohr konzentrisch umgebender äußerer Kanal 36 ausgebildet, der seinerseits an eine im Anschlussteil 32 ausgebildete Anschlussbohrung 37 angeschlossen ist.

Zur Ausbildung eines entsprechenden Strömungsweges ist das Innenrohr 34 mit zwei im axialen Abstand zueinander angeordneten radial umlaufenden Reihen von Bohrungen versehen, und zwar an seinem dem offenen Ende des Aufnahmeteils 30 und damit dem dem in das Aufnahmeteil 30 einzusteckenden Steckerteil 10 zugewandten Ende mit vorderen Bohrungen 38 und mit entsprechend im axialen Abstand dazu angeordneten hinteren Bohrungen 39.

Auf dem Innenrohr 34 des Aufnahmeteils 30 ist weiterhin zum Verschließen von dessen äußerem Kanal 36 ein hülsenförmiger Schließkörper 40 geführt, der von einer sich an einem Federwiderlager 42 abstützenden Feder 41 in eine vordere Schließstellung beaufschlagt ist, in welcher der hülsenförmige Schließkörper 40 die vorderen Bohrungen 38 des Innenrohres 34 überdeckt und damit abdichtet. Hierzu weist der hülsenförmige Schließkörper 40 in seinem Inneren ein Halteteil 43 auf, welches zwei an den beiden Enden des Schließkörpers 40 jeweils angeordnete Gleitringe 44 und einen dazwischen liegenden Distanzring 45 festlegt. Es ist zu erkennen, dass in der aus Figur 3 ersichtlichen Schließstellung des Aufnahmeteils 30 die vorderen Bohrungen 38 des Innenrohres 34 durch den Distanzring 45 des hülsenförmigen Schließkörpers 40 überdeckt sind. Die diesbezügliche Abdichtung der vorderen Bohrungen 38 ist durch eine Abdichtung der beiden äußeren, den Distanzring 45 zwischen sich einfassenden Gleitringe 44 mittels entsprechender Weichdichtungen gegen das diese haltende Halteteil 43 als Bestandteil des Schließkörpers 40 verwirklicht, so dass nach vorne kein Fluid aus dem Innenrohr 34 austreten kann. Dagegen liegen die hinteren Bohrungen 39 des Innenrohres 34 außerhalb einer Überdeckung mit dem hülsenförmigen Schließkörper 40, so dass über die hinteren Bohrungen 39 zum Druckausgleich eine Verbindung zwischen dem inneren Kanal 33 und dem äußeren Kanal 36 des Aufnahmeteils 30 besteht, wie dies auch in der bereits genannten EP 1 789 717 B1 beschrieben ist.

Ferner ist an dem Ventilkörper 31 des Aufnahmeteil 30 eine nach vorne überstehende und zur Aufnahme des Steckerteils 30 eingerichtete Verriegelungshülse 46 angeordnet, die innenseitig hervorstehende Mitnehmervorsprünge 47 trägt. Diese Mitnehmervorsprünge 47 sind zum Eingriff in die schraubenförmigen Nuten 29 des in das Aufnahmeteil 30 bzw. in dessen Verriegelungshülse 46 eingeschobenen Steckerteils 10 eingerichtet derart, dass bei einer Drehung der Verriegelungshülse 46 die Mitnehmervorsprünge 47 in den schraubenförmigen Nuten 29 des Steckerteils 10 gleiten und dadurch das Steckerteil axial in das Aufnahmeteil 30 hineinziehen und im Kupplungszustand Steckerteil 10 und Aufnahmeteil 30 gegeneinander festlegen. Eine derartige Ausbildung ist in der schon genannten WO 2008/ 130311 A1 beschrieben.

Zur Erhöhung der Handhabungssicherheit ist auf dem Ventilkörper 31 des Aufnahmeteils 30 bzw. auf der daran angeordneten Verriegelungshülse 46 zusätzlich eine Betätigungshülse 48 verschiebbar angeordnet, die von einer sich entsprechend abstützenden Feder 49 in ihre hintere Stellung vorgespannt ist. Weiterhin sind in über den Umfang der Verriegelungshülse 46 verteilt angeordneten radialen Bohrungen Verriegelungskugeln 50 eingelegt, die mit einem Teilbereich ihres Querschnitts über den Umfang der Verriegelungshülse 46 hervorstehen. In der durch die Kraft der Feder 49 bewirkten hinteren Ruhestellung der Betätigungshülse 48 liegen an dieser entsprechend angeordnete Freimachungen 52 über den Verriegelungskugeln 50, so dass in dieser Ruhestellung die Betätigungshülse 48 gegenüber der Verriegelungshülse 46 frei drehbar ist, ohne dass bei Drehung der Betätigungshülse 48 die Verriegelungshülse 46 in Drehung versetzt wird. Mit axialem Versatz zu den Freimachungen 52 sind innenseitig an der Betätigungshülse 48 weiterhin Kugelaufnahmen 51 ausgebildet. Wird die Betätigungshülse 48 entgegen der Wirkung der Feder 49 nach vorne von dem Anschlussteil 32 weg verschoben, so schieben sich die Kugelaufnahmen 51 der Betätigungshülse 48 über die Verriegelungskugeln 50 der Verriegelungshülse 46, so dass in dieser vorgeschobenen Stellung der Betätigungshülse 48 ein Formschluss zwischen der Betätigungshülse 48 und der Verriegelungshülse 46 als Sperre gegeben ist. Wird in dieser verschobenen Stellung die Betätigungshülse 48 gedreht, so nimmt die Betätigungshülse 48 die Verriegelungshülse 46 bei ihrer Drehung mit, so dass durch den Eingriff der Mitnehmervorsprünge 47 in die schraubenförmige Nut 29 der Kupplungsvorgang bzw. auch ein Entkupplungsvorgang aktiv eingeleitet ist. Nach dem Ende des Kuppel- bzw. Entkuppelvorgangs und Loslassen der Betätigungshülse 48, wird diese durch die Feder 49 in ihre hintere, dem Anschlussteil 32 zugewandte Stellung zurückgedrückt, in welcher wiederum die Betätigungshülse 48 gegenüber der Verriegelungshülse 46 frei drehbar ist und ein versehentlicher Kupplungs- oder Entkupplungsvorgang nicht möglich ist.

Soweit vorstehend Steckerteil 10, Aufnahmeteil 30 sowie Zusatzventil 60 mit den zugehörigen Einzelteilen beschrieben sind, versteht es sich, dass die Einzelbauteile der vorgenannte Bauteile jeweils in geeigneter Weise mittels gesonderter Dichtungen abzudichten sind, wobei auf die Lage dieser Dichtungen im Einzelnen nicht weiter eingegangen ist, soweit diese nicht in einem unmittelbaren Zusammenhang mit der Erfindung stehen.

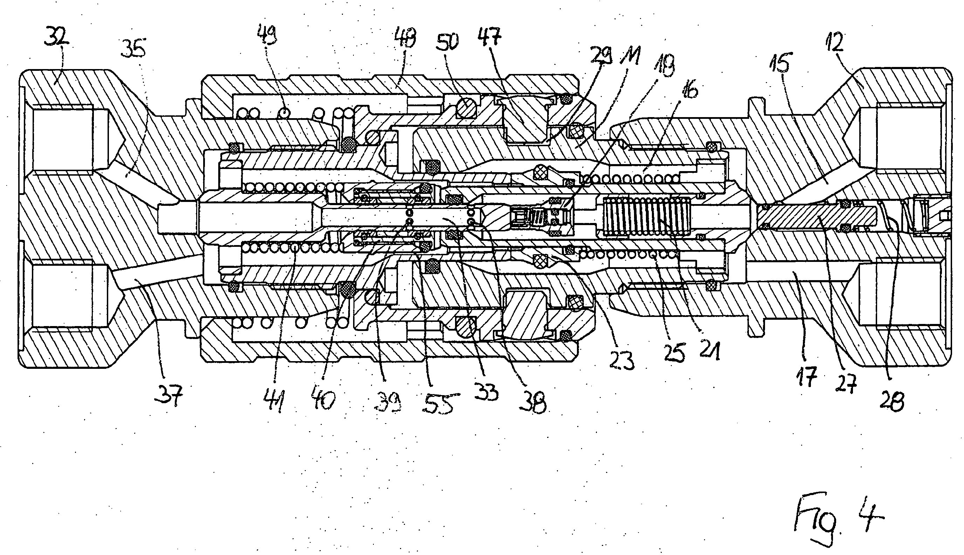

Soweit sich aus Figur 4 der gekuppelte Zustand von Steckerteil 10 und Aufnahmeteil 30 ergibt, ist erkennbar, dass der Ventilkörper 11 des Steckerteils 10 in das Aufnahmeteil 30 eingeschoben ist, wobei die Mitnehmervorsprünge 47 der Verriegelungshülse 46 des Aufnahmeteils 30 in den schraubenförmigen Nuten 29 des Steckerteils 10 liegen und das Steckerteil 10 somit gegenüber dem Aufnahmeteil 30 festlegen. Die Betätigungshülse 48 befindet sich dabei aufgrund der Federwirkung 49 in ihrer hinteren Stellung, in welcher sie gegenüber der Verriegelungshülse 46 frei drehen kann, so dass eine versehentliche Entkupplung ausgeschlossen ist. Hierbei hat das Innenrohr 34 des Aufnahmeteils 30 den Schließkegel 18 entgegen der diesen beaufschlagenden Feder 21 in das Innenrohr 14 des Steckerteils 10 hinein verschoben, so dass das über das Innenrohr 34 des Aufnahmeteils 30 heranfließende Fluid über die vorderen Bohrungen 38 in den inneren Kanal 13 des Steckerteils 10 hineinfließen kann. Bei entsprechendem Druck wird anschließend das Rückschlagventil 27 in der Anschlussbohrung 15 des Anschlussteils 12 geöffnet, so dass das Fluid weiter in die an das Anschlussteil 12 angeschlossene Rohr- oder Schlauchleitung fließen kann. Gleichzeitig hat das vordere Ende des Innenrohres 14 des Steckerteils 10 den hülsenförmigen Schließkörper 40 auf dem Innenrohr 34 des Aufnahmeteils 30 entgegen der diesen vorspannenden Feder 41 nach hinten verschoben, so dass Halteteil 43 bzw. Gleitring 44 des hülsenförmigen Schließkörpers 40 einerseits die vorderen Bohrungen 38 des Innenrohres 40 des Aufnahmeteils 30 für den bereits beschriebenen Strömungsweg freigegeben haben, andererseits aber die hinteren Bohrungen 39 des Innenrohres 34 des Aufnahmeteils 30 bereits verschlossen sind, so dass der in ungekuppeltem Zustand an dieser Stelle bestehende Kurzschlussweg nunmehr gesperrt ist. Gleichzeitig sind der äußere Kanal 16 des Steckerteils 10 und der äußere Kanal 36 des Aufnahmeteils 30 über einen äußeren Strömungskanal 55 miteinander verbunden.

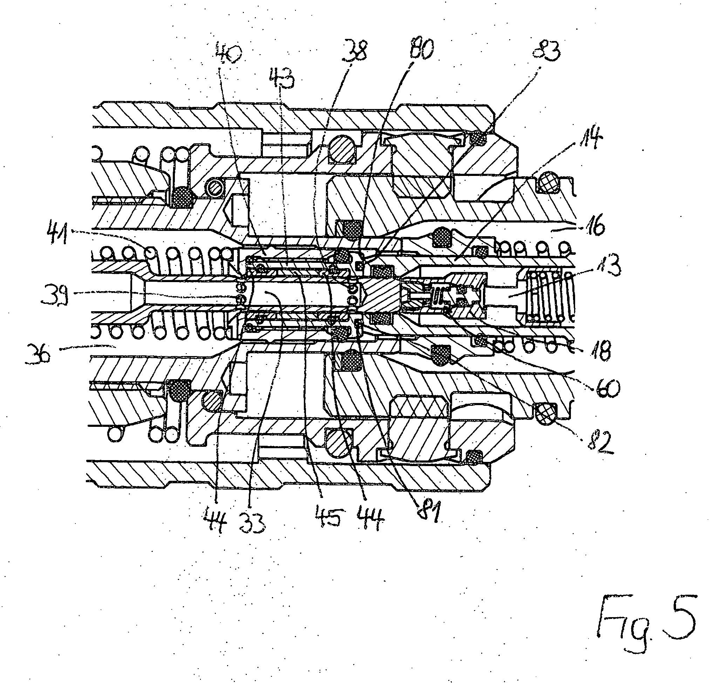

In Figur 5 ist eine Zwischenstellung von Aufnahmeteil 30 und Steckerteil 10 während des Kupplungsvorganges dargestellt, in welcher auch während dieses Kupplungsvorganges der innere Kanal 33 des Aufnahmeteils 30 gegen den äußeren Kanal 16 des Steckerteils 10 abgedichtet bleibt. Hierzu ist in der Stirnfläche 80 des Schließkörpers 40 bzw. des darin gehalterten Halteteils 43 eine Nut 81 mit einer darin eingelegten Dichtung 82 ausgebildet, so dass bei während des Kupplungsvorganges gegen die Stirnfläche 80 des Schließkörpers 40 anliegender Stirnfläche 83 des Innenrohres 14 des Steckerteils 10 die beiden Stirnflächen 80 und 83 gegeneinander abgedichtet sind. Somit kann das bereits während des Kupplungsvorganges aus der vorderen Bohrung 38 des Innenrohres 34 des Aufnahmeteils 30 austretende Fluid nicht in den Außenkanal 16 des Steckerteils 10 eintreten.

Wie nicht weiter dargestellt, kann in einer alternativen Ausführungsform der Erfindung durch eine entsprechende Bearbeitung einer der Stirnflächen 80 von Schließkörper 40 bzw. 83 von Innenrohr 14 dafür Sorge getragen sein, dass sich bei während des Kupplungsvorganges aneinander anliegenden Stirnflächen 80, 83 eine metallische Abdichtung zwischen den Stirnflächen einstellt.

Gemäß einer alternativen Ausführungsform der Erfindung kann aber in Übereinstimmung mit der EP 1 789 717 B1 entsprechend der gemäß Figuren 1 und 3 vorgeschlagenen Ausbildung vorgesehen sein, dass während eines kurzen Momentes des Kupplungsvorganges der innere Kanal 33 des Aufnahmeteils 30 mit dem äußeren Kanal 16 des Steckerteils 10 verbunden ist, und zwar während des Einschiebens des Innenrohres 34 des Ventilkörpers 31 des Aufnahmeteils 30 in den Ventilkörper 11 des Steckerteils 10 einerseits und während des Zurückdrängens des hülsenförmigen Schließkörpers 40 zur Freigabe der vorderen Bohrungen 38 des Innenrohres 34 durch die vordere Stirnfläche 83 des Innenrohres 14 des Steckerteils 10 andererseits. In dieser Zwischenstellung ist durch den Abstand der vorderen Bohrungen 38 und der hinteren Bohrungen 39 dafür Sorge getragen, dass in dem Augenblick einer Verbindung des inneren Kanals 33 des Aufnahmeteils 30 mit dem äußeren Kanal 16 des Steckerteils 10 über die aneinander anliegenden Stirnflächen 80 des Schließkörpers 40 und 83 von Innenrohr 14 die Kurzschlussverbindung zwischen dem inneren Kanal 33 und dem äußeren Kanal 36 des Aufnahmeteils 30 über die hinteren Bohrungen 39 durch die vorgegebene Stellung des hülsenförmigen Schließkörpers 40 unterbrochen ist.

Zum Aufheben der aus Figur 4 ersichtlichen Kupplungsstellung wird die Betätigungshülse 48 entgegen der Federwirkung 49 in die vordere Stellung verschoben, in welcher die Kugelaufnahmen 51 der Betätigungshülse 48 mit den Verriegelungskugeln 50 der Verriegelungshülse 46 verrasten zur Ausbildung der Sperre, so dass eine Rückdrehung der Betätigungshülse 48 auch zu einer entsprechenden Verdrehung der Verriegelungshülse 46 mit einer Freigabe des Steckerteils 10 aus dem Aufnahmeteil 30 führt.

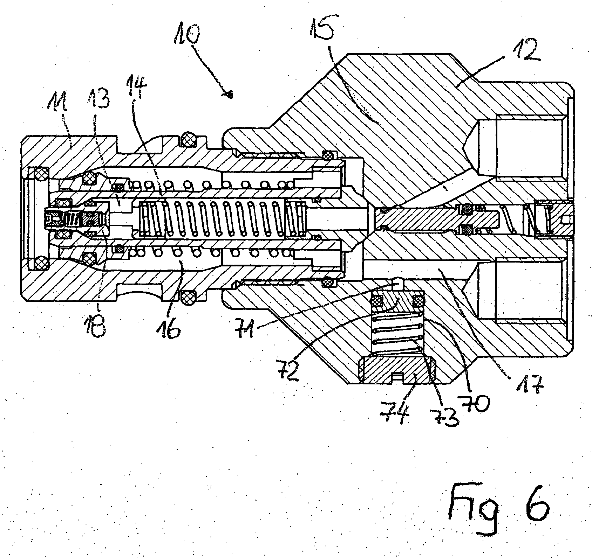

Wie sich aus Figur 6 ergibt, kann das zu Figuren 1 bis 4 im Einzelnen beschriebene Steckerteil 10 mit einer zusätzlichen Überdrucksicherung für das bei entkuppelter Hochdruckkupplung in dessen äußerem Kanal 16 bzw. der daran anschließenden Anschlussbohrung 17 anstehende Fluidvolumen vorgesehen sein. Hierzu ist in dem Aufnahmeteil 12 ein mittels einer Verbindungsbohrung 71 an die Anschlussbohrung 17 angeschlossener Hohlraum 70 ausgebildet, der an seiner Außenseite mittels eines Verschlussstopfens 74 flüssigkeitsdicht verschlossen ist. In dem Hohlraum 70 ist ein mit einer umlaufenden Außendichtung versehener Kolben 72 verschiebbar angeordnet, der von einer sich gegen den Verschlussstopfen 74 abstützenden Feder 73 in eine die Verbindungsbohrung 71 zur Anschlussbohrung 17 verschließende Stellung vorgespannt ist. Kommt es nun bei entkuppelter Hochdruckkupplung in dem äußeren Kanal 16 bzw. in der Anschlussbohrung 17 zu einem Druckanstieg, so drückt das anstehende Fluidvolumen den Kolben 72 in dem Hohlraum 70 entgegen der Kraft der Feder 73 in eine den Hohlraum 70 entsprechend freigebende Stellung, in welcher mit dem freigegebenen Hohlraum 80 ein zusätzliches Volumen zur Verfügung steht, durch welches ein entsprechender Druckanstieg verhindert ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Koaxiale Hochdruckkupplung für Schläuche oder Rohrleitungen mit einem Steckerteil (10) und mit einem dieses in gekuppeltem Zustand aufnehmenden Aufnahmeteil (30), wobei Steckerteil (10) und Aufnahmeteil (30) jeweils einen Ventilkörper (11, 31) mit einem inneren Kanal (13, 33) und einem dazu konzentrischen äußeren Kanal (16, 36) aufweisen und in gekuppeltem Zustand die inneren Kanäle (13, 33) und die äußeren Kanäle (16, 36) von Steckerteil (10) und Aufnahmeteil (30) miteinander verbunden sind, und wobei in dem inneren Kanal (13) des Ventilkörpers (11) des Steckerteils (10) ein Schließkegel (18) und in dem äußeren Kanal (16) des Steckerteils (10) eine Schließhülse (23) jeweils gegen Federwirkung (21, 25) beweglich und während des Kupplungsvorganges jeweils durch das Aufnahmeteil (30) in ihre Öffnungsstellung verschiebbar sind, **dadurch gekennzeichnet, dass** im Inneren des in dem von einem Innenrohr (14) gebildeten inneren Kanal (13) beweglichen Schließkegels (18) eine einerseits mit dem inneren Kanal (13) verbundene und andererseits eine Verbindung mit der Atmosphäre aufweisende Ventilbohrung (61) mit einem darin verschiebbar angeordneten Ventilkolben (62) angeordnet ist und der Ventilkolben (62) durch Federwirkung (63) in seine die Verbindung zwischen der Ventilbohrung (61) und dem inneren Kanal (13) sperrende Sperrstellung vorgespannt und durch einen entgegen der Feder (63) wirkenden, im inneren Kanal (13) anstehenden Überdruck in eine Leckagestellung verschiebbar ist.

2. Koaxiale Hochdruckkupplung nach Anspruch 1, **dadurch gekennzeichnet, dass** zur Ausbildung eines in der Leckagestellung des Ventilkolbens (62) wirksamen Leckageweges zwischen dem inneren Kanal (13) und der Atmosphäre die Ventilbohrung (61) mit einer stufenweisen Querschnittserweiterung (64) versehen ist.

3. Koaxiale Hochdruckkupplung nach Anspruch 2, **dadurch gekennzeichnet, dass** die Querschnittserweiterung (64) mit einem von dem Ventilkolben (62) bei Beaufschlagung mit Überdruck zu durchschreitenden Abstand (65) zu dem in seiner Sperrstellung befindlichen Ventilkolben (62) angeordnet ist.

4. Koaxiale Hochdruckkupplung nach einem der Ansprüche 1 bis 3, **dadurch gekennzeichnet, dass** zwischen dem im inneren Kanal (13) des Ventilkörpers (11) des Steckerteils (10) angeordneten Schließkegel (18) und einer an das Steckerteil (10) angeschlossenen weiterführenden Leitung ein Rückschlagventil (27) eingeschaltet ist.

5. Koaxiale Hochdruckkupplung nach einem der Ansprüche 1 bis 4, **dadurch gekennzeichnet, dass** im Steckerteil (10) zur Vermeidung eines Druckanstiegs in dessen äußerem Kanal (16) im Ventilkörper (11) oder im Aufnahmeteil (12) ein mit dem äußeren Kanal (16) oder der diesem zugeordneten Anschlussbohrung (17) verbundener Hohlraum (70) ausgebildet ist, in welchem ein von einer Feder (73) in eine den Hohlraum (70) absperrende Stellung vorgespannter Kolben (72) beweglich ist, der durch einen im äußeren Kanal (16) bzw. in der Anschlussbohrung (17) ansteigenden Druck in den Hohlraum (70) hinein in eine den Hohlraum (70) zum Druckausgleich freigebende Stellung verschiebbar ist.

6. Koaxiale Hochdruckkupplung nach einem der Ansprüche 1 bis 5, wobei der Ventilkörper (31) des Aufnahmeteils (30) zusätzlich ein Kurzschlussventil aufweist, welches in ungekuppelten Zustand eine Verbindung zwischen dem inneren Kanal (33) und dem äußeren Kanal (36) des Aufnahmeteils (30) herstellt und in gekuppeltem Zustand diese Verbindung schließt, **dadurch gekennzeichnet, dass** ein den inneren Kanal (33) des Aufnahmeteils (30) bildendes Innenrohr (34) zwei im axialen Abstand zueinander angeordnete Bohrungen (38, 39) aufweist und ein in dem das Innenrohr (34) umschließenden äußeren Kanal (36) auf dem Innenrohr (34) verschiebbarer hülsenförmiger Schließkörper (40) einerseits in einer im ungekuppelten Zustand gegebenen Schließstellung die vordere, dem Steckerteil (10) zugewandte Bohrung (38) des Innenrohrs (34) verschließt und die hintere Bohrung (39) als Kurzschlussweg zwischen innerem Kanal (33) und äußerem Kanal (36) des Aufnahmeteils (30) freigibt und andererseits in einer durch eine während des Kupplungsvorganges eintretende Anlage der dem Aufnahmeteil (30) zugewandten Stirnfläche (83) des Innenrohres (14) des Steckerteils (10) an der Stirnfläche (80) des Schließkörpers (40) des Aufnahmeteils (30) in das Innere des Ventilkörpers (31) des Aufnahmeteils (30) hinein verschobenen Stellung die hintere Bohrung (39) des Innenrohres (34) verschließt und die vordere Bohrung (38) freigibt, so dass in gekuppeltem Zustand der innere Kanal (33) des Aufnahmeteils (30) über die vordere Bohrung (38) mit dem inneren Kanal (13) des Steckerteils (10) verbunden ist.

7. Koaxiale Hochdruckkupplung nach Anspruch 6, **dadurch gekennzeichnet, dass** bei während des Kupplungsvorganges erfolgter Freigabe der vorderen Bohrung (38) des Innenrohres (34) des Aufnahmeteils (30) durch den von dem gegen seine Stirnfläche (80) anliegenden Innenrohr (14) des Steckerteils (10) verschobenen Schließkörper (40) zur fortwährenden Abdichtung des inneren Kanals (33) des Aufnahmeteils (30) gegen den äußeren Kanal (16) des Steckerteils (10) die Stirnflächen (80, 83) von Schließkörper (40) und Innenrohr (14) gegeneinander abgedichtet sind.

8. Koaxiale Hochdruckkupplung nach Anspruch 7, **dadurch gekennzeichnet, dass** zur Abdichtung der Stirnflächen (80, 83) gegeneinander in einer der beiden Stirnflächen (80, 83) eine Nut (81) mit einer darin eingelegten Dichtung (82) angeordnet ist.

9. Koaxiale Hochdruckkupplung nach Anspruch 7, **dadurch gekennzeichnet, dass** zur Abdichtung der Stirnflächen (80, 83) gegeneinander durch Bearbeitung wenigstens einer Stirnfläche (80, 83) eine bei gegenseitiger Anlage der Stirnflächen (80, 83) verwirklichte metallische Dichtung eingerichtet ist.

10. Koaxiale Hochdruckkupplung nach Anspruch 6, **dadurch gekennzeichnet, dass** bei während des Kupplungsvorganges erfolgter Freigabe der vorderen Bohrung (38) des Innenrohres (34) des Aufnahmeteils (30) durch den von dem gegen seine Stirnfläche (80) anliegenden Innenrohr (14) verschobenen Schließkörper (40) die Stirnflächen (80, 83) von Schließkörper (40) und Innenrohr (14) einen Flüssigkeitsdurchgang zulassen und in einem Zwischenstadium während des Kupplungsvorganges der innere Kanal (33) des Aufnahmeteils (30) mit dem äußeren Kanal (16) des Steckerteils (10) kurzzeitig verbunden ist.

11. Koaxiale Hochdruckkupplung nach einem der Ansprüche 6 bis 10, **dadurch gekennzeichnet, dass** im Inneren des auf dem Innenrohr (34) verschiebbaren hülsenförmigen Schließkörpers (40) jeweils ein an dessen äußeren Enden angeordneter Gleitring (44) aus einem gleitfähigen Material und ein dazwischen liegender Distanzring (45) angeordnet sind, wobei in der Schließstellung des Schließkörpers (40) der Distanzring (45) in dem ungekuppelten Zustand die vordere Bohrung (38) des Innenrohres (34) überdeckt und die beiden Gleitringe (44) mittels auf ihrem Umfang angeordneter Dichtungsringe gegen den Schließkörper (40) abgedichtet sind.

12. Koaxiale Hochdruckkupplung nach einem der Ansprüche 1 bis 11, wobei an dem Aufnahmeteil (30) eine drehbare äußere Betätigungshülse (48) und eine damit zusammenwirkende innere Verriegelungshülse (46) mit daran ausgebildeten und in schraubenförmige Nuten (29) des Steckerteils (10) eingreifenden Mitnehmervorsprüngen (47) angeordnet ist, **dadurch gekennzeichnet, dass** die äußere Betätigungshülse (48) relativ zu der Verriegelungshülse (46) zwischen einer ungekoppelten, gegenüber der Verriegelungshülse (46) frei drehbaren Ruhestellung und einer Eingriffsstellung mit der Verriegelungshülse (46) verschiebbar ist und in der Eingriffsstellung mittels einer Sperre (50, 51) mit der Verriegelungshülse (46) verrastet, so dass nur in der Eingriffsstellung bei Drehung der Betätigungshülse (48) die Verriegelungshülse 46) in eine Drehbewegung mitgenommen wird.

## Claims

1. A coaxial high-pressure coupling for hoses or pipelines with a plug part (10) and with a receptacle part (30) that accommodates the plug part in the coupled state, wherein the plug part (10) and the receptacle part (30) each have a valve body (11, 31) with an inner channel (13, 33) and an outer channel (16, 36) arranged concentric thereto, wherein the inner channels (13, 33) and the outer channels (16, 36) of the plug part (10) and of the receptacle part (30) are connected to one another in the coupled state, wherein a closing cone (18) can be moved in the inner channel (13) of the valve body (11) of the plug part (10) and a closing sleeve (23) can be moved in the outer channel (16) of the plug part (10) against the respective force of a spring (21, 25), and wherein the closing cone and the closing sleeve can be respectively displaced into their open position by the receptacle part (30) during the coupling process, **characterized in that** a valve bore (61), which is connected to the inner channel (13) at one end and connected to the atmosphere at the other end and has a valve piston (62) displaceably arranged therein, is arranged in the interior of the closing cone (18) that can be moved in the inner channel (13) formed by an inner pipe (14), and **in that** the valve piston (62) is prestressed into its blocking position, in which it blocks the connection between the valve bore (61) and the inner channel (13), by the force of a spring (63) and can be displaced into a leakage position by an overpressure in the inner channel (13) that acts against the spring (63).

2. The coaxial high-pressure coupling according to Claim 1, **characterized in that** the valve bore (61) is provided with an incremental cross-sectional widening (64) in order to realize an effective leakage path between the inner channel (13) and the atmosphere in the leakage position of the valve piston (62).

3. The coaxial high-pressure coupling according to Claim 2, **characterized in that** the cross-sectional widening (64) is spaced apart from the valve piston (62) situated in its blocking position by a clearance (65) that needs to be traveled by the valve piston (62) when it is acted upon with an overpressure.

4. The coaxial high-pressure coupling according to one of Claims 1 to 3, **characterized in that** a check valve (27) is inserted between the closing cone (18) arranged in the inner channel (13) of the valve body (11) of the plug part (10) and a continuing line attached to the plug part (10).

5. The coaxial high-pressure coupling according to one of Claims 1 to 4, **characterized in that** a hollow space (70), which is connected to the outer channel (16) or to the connecting bore (17) assigned thereto, is provided in the plug part (10) in order to prevent a pressure increase in its outer channel (16) in the valve body (11) or in the receptacle part (12), wherein a piston (72) is movably arranged in said hollow space and prestressed into a position, in which it blocks the hollow space (70), by means of a spring (73), and wherein said piston can be displaced into the hollow space (70) into a position, in which it unblocks the hollow space (70) so as to realize a pressure compensation, due to an increasing pressure in the outer channel (16) or in the connecting bore (17).

6. The coaxial high-pressure coupling according to one of Claims 1 to 5, in which the valve body (31) of the receptacle part (30) has an additional bypass valve that produces a connection between the inner channel (33) and the outer channel (36) of the receptacle part (30) in the decoupled state and closes this connection in the coupled state, **characterized in that** an inner pipe (34) forming the inner channel (33) of the receptacle part (30) has two bores (38, 39) that are arranged at an axial clearance from one another, and **in that** a sleeve-shaped closing body (40), which can be displaced on the inner pipe (34) in the outer channel (36) surrounding the inner pipe (34), on the one hand closes the front bore (38) of the inner pipe (34) that faces the plug part(10) and opens the rear bore (39) as a bypass between the inner channel (33) and the outer channel (36) of the receptacle part (30) in a closing position, in which the sleeve-shaped closing body is situated in the decoupled state, and on the other hand closes the rear bore (39) of the inner pipe (34) and opens the front bore (38) in a position, in which the sleeve-shaped closing body is displaced into the interior of the valve body (31) of the receptacle part (30) due to the contact between the end face (83) of the inner pipe (14) of the plug part (10) facing the receptacle part (30) and the end face (80) of the closing body (40) of the receptacle part (30) during the coupling process, such that the inner channel (33) of the receptacle part (30) is connected to the inner channel (13) of the plug part (10) via the front bore (38) in the coupled state.

7. The coaxial high-pressure coupling according to Claim 6, **characterized in that** the end faces (80, 83) of the closing body (40) and of the inner pipe (14) are sealed relative to one another while the front bore (38) of the inner pipe (34) of the receptacle part (30) is opened due to the displacement of the closing body (40) by the inner pipe (14) of the plug part (10) that contacts its end face (80) in order to continuously seal the inner channel (33) of the receptacle part (30) relative to the outer channel (16) of the plug part (10).

8. The coaxial high-pressure coupling according to Claim 7, **characterized in that** a groove (81) with a seal (82) inserted therein is arranged in one of the two end faces (80, 83) in order to seal the end faces (80, 83) relative to one another.

9. The coaxial high-pressure coupling according to Claim 7, **characterized in that** at least one end face (80, 83) is processed such that a metallic seal is realized when the end faces (80, 83) contact one another in order to seal the end faces (80, 83) relative to one another.

10. The coaxial high-pressure coupling according to Claim 6, **characterized in that** the end faces (80, 83) of the closing body (40) and of the inner pipe (14) allow a fluid passage while the front bore (38) of the inner pipe (34) of the receptacle part (30) is opened during the coupling process due to the displacement of the closing body (40) by the inner pipe (14) that contacts its end face (80) and the inner channel (33) of the receptacle part (30) is briefly connected to the outer channel (16) of the plug part (10) in an intermediate stage during the coupling process.

11. The coaxial high-pressure coupling according to one of Claims 6 to 10, **characterized in that** a sliding ring (44) of a material with sound sliding properties, which is respectively positioned on the outer ends of the sleeve-shaped closing body, as well as a spacer ring (45) lying in between, are arranged in the interior of the sleeve-shaped closing body (40) that can be displaced on the inner pipe (34), wherein the spacer ring (45) covers the front bore (38) of the inner pipe (34) in the closing position of the closing body (40) in the decoupled state and the two sliding rings (44) are sealed relative to the closing body (40) by means of ring seals arranged on their circumference.

12. The coaxial high-pressure coupling according to one of Claims 1 to 11, in which a rotatable outer actuating sleeve (48) and an inner locking sleeve (46) that cooperates with the actuating sleeve and has driving projections (47) that engage into helical grooves (29) of the plug part (10) are arranged on the receptacle part (30), **characterized in that** the outer actuating sleeve (48) can be displaced relative to the locking sleeve (46) between a decoupled idle position, in which it is freely rotatable relative to the locking sleeve (46), and an engaged position with the locking sleeve (46), wherein the actuating sleeve is interlocked with the locking sleeve (46) with the aid of an interlock means (50, 51) in the engaged position such that the locking sleeve (46) is only rotationally driven due to a rotation of the actuating sleeve (48) in the engaged position.

## Revendications

1. Accouplement de haute pression coaxial pour flexibles ou conduits tubulaires avec une partie de connexion (10) et avec une partie de réception (30) logeant celle-ci à l'état accouplé, la partie de connexion (10) et la partie de réception (30) comportant respectivement un corps de soupape (11, 31) avec un conduit intérieur (13, 33) et un conduit extérieur (16, 36) concentrique à cet effet et à l'état accouplé, les conduits intérieurs (13, 33) et les conduits extérieurs (16, 36) sont reliés entre eux par la partie de connexion (10) et la partie de réception (30) et dans le conduit intérieur (13) du corps de soupape (11) de la partie de connexion (10), un cône de fermeture (18), et dans le conduit extérieur (16) de la partie de connexion (10), un manchon de fermeture (23) peuvent être respectivement mobiles contre un effet de ressort (21, 25) et respectivement déplacés pendant le procédé d'accouplement à travers la partie de réception (30) dans leur position d'ouverture, **caractérisé en ce qu'**à l'intérieur du cône de fermeture (18) mobile dans le conduit intérieur (13) formé par un tube intérieur (14), un alésage de soupape (61) relié d'une part avec le conduit intérieur (13) et comportant d'autre part une liaison avec l'atmosphère, est disposé avec un piston de soupape (62) disposé mobile dans celui-ci et le piston de soupape (62) est précontraint par l'effet de ressort (63) dans sa position de blocage bloquant la liaison entre l'alésage de soupape (61) et le conduit intérieur (13) et peut être déplacé dans une position de fuite par une surpression en suspens dans le conduit intérieur (13), agissant contre le ressort (63).

2. Accouplement de haute pression coaxial selon la revendication 1, **caractérisé en ce que** pour former une voie de fuite efficace dans la position de fuite du piston de soupape (62) entre le conduit intérieur (13) et l'atmosphère, l'alésage de soupape (61) est doté d'un élargissement transversal étagé (64).

3. Accouplement de haute pression coaxial selon la revendication 2, **caractérisé en ce que** l'élargissement transversal (64) est disposé à une distance (65) à traverser par le piston de soupape (62) lors de l'application d'une surpression pour le piston de soupape (62) se trouvant dans sa position de blocage.

4. Accouplement de haute pression coaxial selon l'une quelconque des revendications 1 à 3, **caractérisé en ce qu'**un clapet anti-retour (27) est monté entre le cône de fermeture (18) disposé dans le conduit intérieur (13) du corps de soupape (11) de la partie de connexion (10) et une conduite continuant raccordée à la partie de connexion (10).

5. Accouplement de haute pression coaxial selon l'une quelconque des revendications 1 à 4, **caractérisé en ce que** dans la partie de connexion (10) pour éviter une hausse de pression dans son conduit extérieur (16), un espace creux (70) est constitué dans le corps de soupape (11) ou dans la partie de réception (12), relié au conduit extérieur (16) ou à l'alésage de raccord (17) attribué à celui-ci, dans lequel un piston (72) précontraint par un ressort (73) dans une position bloquant l'espace creux (70) est mobile, qui peut être déplacé dans une position libérant l'espace creux (70) pour l'équilibre de pression par une pression à l'intérieur de l'espace creux (70) augmentant dans le conduit extérieur (16) ou dans l'alésage de raccord (17).

6. Accouplement de haute pression coaxial selon l'une quelconque des revendications 1 à 5, le corps de soupape (31) de la partie réception (30) comportant en plus une soupape à court-circuit, laquelle à l'état désaccouplée établit une liaison entre le conduit intérieur (33) et le conduit extérieur (36) de la partie de réception (30) et à l'état accouplé ferme cette liaison, **caractérisé en ce qu'**un tube intérieur (34) formant le conduit intérieur (33) de la partie de réception (30) comporte deux alésages (38, 39) disposés à distance axiale l'un par rapport à l'autre et un corps de fermeture (40) en forme de manchon, mobile sur le tube intérieur (34) dans le conduit extérieur (36) entourant le tube intérieur (34), ferme d'une part dans une position de fermeture donnée à l'état désaccouplé, l'alésage (38) avant tourné vers la partie de connexion (10) du tube intérieur (34) et libère l'alésage arrière (39) en tant que voie de court-circuit entre le conduit intérieur (33) et le conduit extérieur (36) de la partie de réception (30) et ferme d'autre part l'alésage arrière (39) du tube intérieur (34) dans une position déplacée par une installation intervenant pendant le procédé d'accouplement de la surface frontale (83) tournée vers la partie de réception (30) du tube intérieur (14) de la partie de connexion (10) sur la surface frontale (80) du corps de fermeture (40) de la partie de réception (30) à l'intérieur du corps de soupape (31) de la partie de réception (30) et libère l'alésage avant (38) de telle manière qu'à l'état couplé, le conduit intérieur (33) de la partie de réception (30) est relié par l'alésage avant (38) au conduit intérieur (13) de la partie de connexion (10).

7. Accouplement de haute pression coaxial selon la revendication 6, **caractérisé en ce que** lors de la libération de l'alésage avant (38) du tube intérieur (34) de la partie de réception (30), ayant eu lieu pendant le procédé d'accouplement, les surfaces frontales (80, 83) du corps de fermeture (40) et le tube intérieur (14) sont étanchéifiés l'un par rapport à l'autre par le corps de fermeture (40) déplacé du tube intérieur (14) appliqué contre sa surface frontale (80) de la partie de connexion (10) pour l'étanchéification continue du conduit intérieur (33) de la partie de réception (30) contre le conduit extérieur (16) de la partie de connexion (10).

8. Accouplement de haute pression coaxial selon la revendication 7, **caractérisé en ce que** pour étanchéifier les surfaces frontales (80, 83) l'une par rapport à l'autre, une rainure (81) est disposée dans une des deux surfaces frontales (80, 83) avec un joint (82) introduit dedans.

9. Accouplement de haute pression coaxial selon la revendication 7, **caractérisé en ce que** pour étanchéifier les surfaces frontales (80, 83) l'une par rapport à l'autre, un joint métallique est aménagé réalisé lors de la mise en place réciproque des surfaces frontales (80, 83) par usinage d'au moins une surface frontale (80, 83).

10. Accouplement de haute pression coaxial selon la revendication 6, **caractérisé en ce que** lors de la libération de l'alésage avant (38) du tube intérieur (34) de la partie de réception (30), ayant eu lieu pendant le procédé d'accouplement, les surfaces frontales (80, 83) du corps de fermeture (40) et le tube intérieur (14) permettent un passage de liquide à travers le corps de fermeture (40) déplacé par le tube intérieur (14) appliqué contre sa surface frontale (80) et dans un état intermédiaire pendant le procédé d'accouplement, le conduit intérieur (33) de la partie de réception (30) est relié pendant une courte durée au conduit extérieur (16) de la partie de connexion (10).

11. Accouplement de haute pression coaxial selon l'une quelconque des revendications 6 à 10, **caractérisé en ce qu'**à l'intérieur du corps de fermeture (40) en forme de manchon, mobile sur le tube intérieur (34) sont disposées respectivement une bague coulissante (44) faite d'un matériau glissant, disposée sur ses extrémités extérieures, et une bague entretoise (45) située entre les deux, dans la position de fermeture du corps de fermeture (40),la bague entretoise (45) à l'état désaccouplé, recouvrant l'alésage avant (38) du tube intérieur (34) et les deux bagues coulissantes (44) étant étanchéifiées contre le corps de fermeture (40) au moyen de bagues d'étanchéité disposées sur leur périphérie.

12. Accouplement de haute pression coaxial selon l'une quelconque des revendications 1 à 11, un manchon d'actionnement (48) rotatif extérieur et un manchon de verrouillage (46) intérieur coopérant avec celui-ci, avec des saillies d'entraînement (47) constituées dessus et venant en prise dans des rainures hélicoïdales (29) de la partie de connexion (10) étant disposés sur la partie de réception (30), **caractérisé en ce que** le manchon d'actionnement extérieur (48) peut être déplacé par rapport au manchon de verrouillage (46) entre une position de repos désaccouplée par rapport au manchon de verrouillage (46) pouvant être librement tournée et une position de mise en prise avec le manchon de verrouillage (46) et est enclenché dans la position de mise en prise au moyen d'un dispositif de blocage (50, 51) avec le manchon de verrouillage (46) de manière que le manchon de verrouillage (46) n'est entraîné dans un mouvement de rotation que dans la position de mise en prise lors de la rotation du manchon d'actionnement (48).
